(19) Europäisches Patentamt
European Patent Office
Office européen des brevets

(11) Veröffentlichungsnummer: **0 322 609 A2**

# (12) EUROPÄISCHE PATENTANMELDUNG

(21) Anmeldenummer: **88120506.6**

(51) Int. Cl.⁴: **C08G 65/34**

(22) Anmeldetag: **08.12.88**

(30) Priorität: **15.12.87 DE 3742445**

(43) Veröffentlichungstag der Anmeldung:
**05.07.89 Patentblatt 89/27**

(84) Benannte Vertragsstaaten:
**CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Ittemann, Peter, Dr.**
**Wilhelm-Busch-Strasse 87**
**D-6700 Ludwigshafen(DE)**
Erfinder: **Heinz, Gerhard, Dr.**
**Im Vogelsang 2**
**D-6719 Weisenheim(DE)**

## (54) Hochtemperaturbeständige Blockcopolykondensate mit verbesserter Wärmeformbeständigkeit.

(57) Hochtemperaturbeständige Blockcopolykondensate, aufgebaut aus
A) 75 bis 98 mol% Polyarylethersulfonblöcken aus
$A_1$) 80 bis 100 mol% wiederkehrenden Einheiten der Formel I

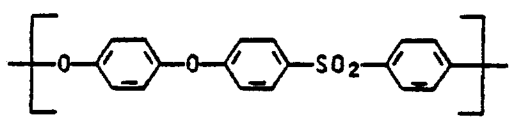

(I)

oder deren kernsubstituierten $C_1$-$C_6$-Alkyl- oder $C_1$-$C_6$-Alkoxy-, Aryl-, Chlor- oder Fluorderivaten und
$A_2$) 0 bis 20 mol% wiederkehrenden Einheiten der allgemeinen Formel II

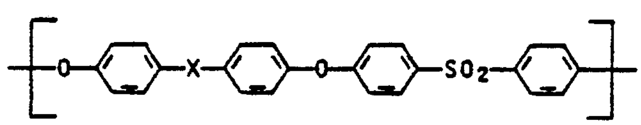

(II)

oder deren kernsubstituierten $C_1$-C&-Alkyl-, $C_1$-$C_6$-Alkoxy-, Aryl-, Chlor- oder Fluorderivaten
wobei X $-SO_2-$, $-C(CH_3)_2-$, -S-, -O- oder eine chemische Bindung darstellt,
und

B) 2 bis 25 mol% Polyaryletherketonblöcken aus wiederkehrenden Einheiten der allgemeinen Formel III

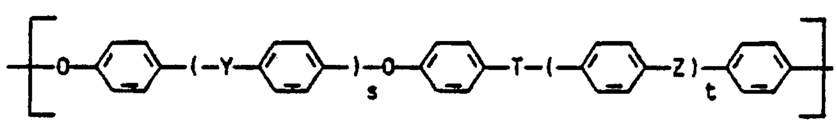

(III)

EP 0 322 609 A2

oder deren kernsubstituierten $C_1$-$C_6$-Alkyl-, $C_1$-$C_6$-Alkoxy-, Phenyl-, Chlor- oder Fluorderivaten,
wobei
Y, T und Z jeweils -CO-, CRR′, eine chem. Bindung oder -O-sein können und mindestens einer der Substituenten Y, T und Z -CO- ist, R und R′ Wasserstoffatome, $C_1$-$C_6$-Alkylgruppen, $C_1$-$C_6$-Alkoxygruppen oder deren Chlor- oder Fluorderivate darstellen,
und s und jeweils den Wert 0 oder 1 haben.

## Hochtemperaturbeständige Blockcopolykondensate mit verbesserter Wärmeformbeständigkeit

Die Erfindung betrifft hochtemperaturbeständige Blockcopolykondensate, aufgebaut aus

A) 75 bis 98 mol-% Polyethersulfonblöcken aus

$A_1$) 80 bis 100 mol-% wiederkehrenden Einheiten der Formel I

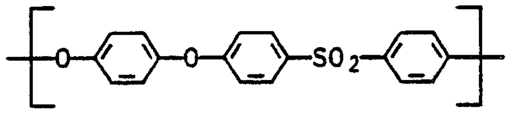

(I)

oder deren kernsubstituierten $C_1$-$C_6$-Alkyl- oder $C_1$-$C_6$-Alkoxy-, Aryl-Chlor- oder Fluorderivaten, und

$A_2$) 0 bis 20 mol-% wiederkehrenden Einheiten der allgemeinen Formel II

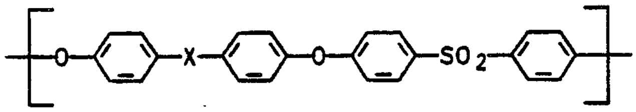

(II)

oder deren kernsubstituierten $C_1$-$C_6$-Alkyl- oder $C_1$-$C_6$-Alkoxy-, Aryl-, Chlor- oder Fluorderivaten, wobei X $-SO_2-$, $-C(CH_3)_2-$, -S-, -O- oder eine chemische Bindung darstellt, und

B) 2 bis 25 mol-% Polyetherketonblöcken aus wiederkehrenden Einheiten der allgemeinen Formel III

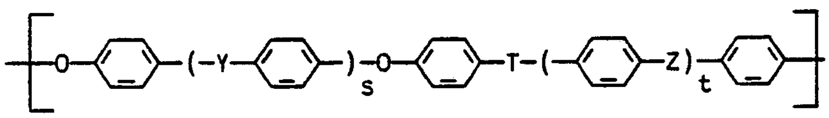

(III)

oder deren kernsubstituierten $C_1$-$C_6$-Alkyl-, $C_1$-$C_6$-Alkoxy-, Aryl-, Chlor- oder Fluorderivaten, wobei

Y, T und Z jeweils -CO-, $CRR'$, eine chem. Bindung oder -O-sein können und mindestens einer der Substituenten Y, T und Z -CO- ist, R und $R'$ Wasserstoffatome, $C_1$-$C_6$-Alkylgruppen, $C_1$-$C_6$-Alkoxygruppen oder deren Chlor- oder Fluorderivate darstellen,

und s und t jeweils den Wert 0 oder 1 haben.

Außerdem betrifft die Erfindung die Verwendung derartiger Blockcopolykondensate zur Herstellung von Formkörpern und die aus den erfindungsgemäßen Blockcopolykondensaten als wesentlichen Komponenten erhältlichen Formkörper.

Statistische Ethersulfon/Etherketon-Blockcopolykondensate sind an sich bekannt und in der Literatur beschrieben. In der EP-A- 1879 und der EP-A 30 033 werden Polymere mit wiederkehrenden Einheiten

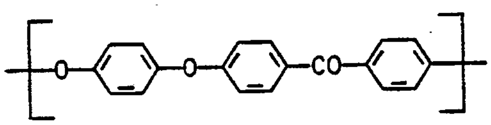

und

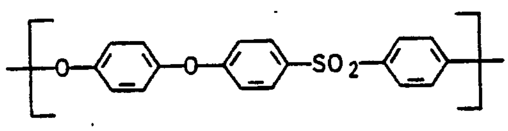

beschrieben, die durch gleichzeitige Umsetzung von Hydrochinon, 4,4'-Dichlorbenzophenon und 4,4'-

Dichlordiphenylsulfon erhältlich sind. Diese weisen in jedem Fall Anteile von mehr als 50 mol-% an Polyaryletherketon-Einheiten auf und sind daher kristallin. Die Kristallinität hat auch zur Folge, daß die Copolymere nicht mehr transparent sind. Dies gilt auch für das in der EP 30 033 in Beispiel 6 beschriebene Blockcopolymere aus Polyaryletherketon- und Polyarylethersulfonblöcken mit einem Polyaryletherketonanteil von etwa 80 mol-%.

Darüber hinaus können die statistischen Copolykondensate hinsichtlich Spannungsrißbeständigkeit und Lösungsmittelbeständigkeit nicht voll zufriedenstellen.

Der vorliegenden Erfindung lag die Aufgabe zugrunde, Copolykondensate mit Etherketon- und Ethersulfongruppen in der Hauptkette zur Verfügung zu stellen, die die vorstehend geschilderten Nachteile nicht zeigen und gleichzeitig auch eine gute Wärmeformbeständigkeit sowie eine gute Spannungsrißbeständigkeit und Lösungsmittelbeständigkeit aufweisen.

Erfindungsgemäß wird diese Aufgabe durch die eingangs definierten hochtemperaturbeständigen Blockcopolykondensate gelöst.

Die erfindungsgemäßen Blockcopolymerisate sind zu 75 bis 98, vorzugsweise 80 bis 96 und besonders bevorzugt 82 bis 95 Gew.% aufgebaut aus Polyarylethersulfonblöcken mit wiederkehrenden Einheiten der allgemeinen Formel I und ggf. der Formel II.

Die wiederkehrenden Einheiten der allgemeinen Formel I

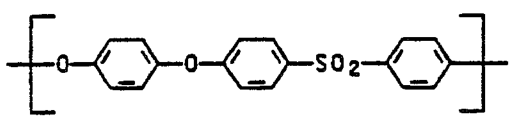

(I)

oder deren kernsubstituierten $C_1$-$C_6$-Alkyl, $C_1$-$C_6$-Alkoxy-, Aryl-, Chlor-oder Fluorderivaten machen 80 bis 100, insbesondere 82 bis 98 und besonders bevorzugt 85 bis 98 Mol% der gesamten wiederkehrenden Einheiten der Polyarylethersulfonblöcke A aus.

Falls eine besonders helle Farbe für die Produkte gewünscht wird, ist es vorteilhaft, in die Polyarylethersulfonblöcke 0 bis 20, insbesondere 2 bis 18 und besonders bevorzugt 2 bis 15 Mol%. an wiederkehrenden Einheiten der allgemeinen Formel II

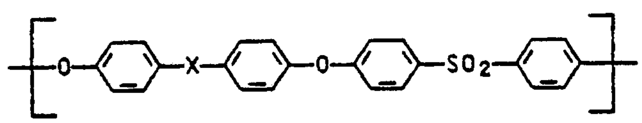

(II)

oder deren kernsubstituierten $C_1$-$C_6$-Alkyl-, $C_1$-$C_6$-Alkoxy-, Aryl-, Chlor-oder Fluorderivaten einzubauen, wobei X $-SO_2-$, $-C(CH_3)_2-$, -S-, -O- oder eine chemische Bindung darstellt.

Bevorzugte Einheiten der allgemeinen Formel II sind die nachstehend aufgeführten, d.h. Einheiten in denen keine Substituenten an den aromatischen Ringen vorhanden sind:

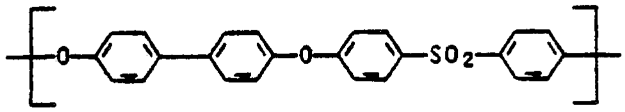

(II1)

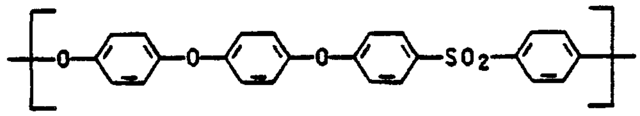

(II2)

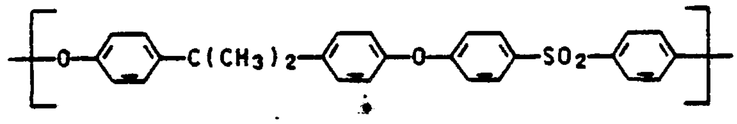

(II3)

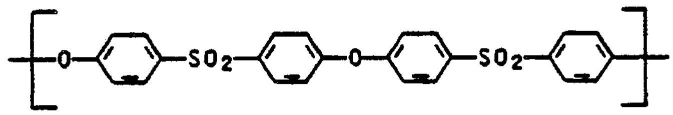

(II4)

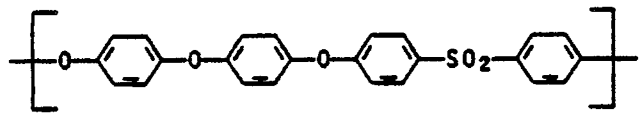

(II5)

Sowohl in den Einheiten der allgemeinen Formel I als auch in den Einheiten der allgemeinen Formel II können $C_1$-$C_6$-Alkyl-, $C_1$-$C_6$-Alkoxy-, Aryl-, Chlor- oder Fluorsubstituenten an den aromatischen Ringen vorhanden sein. Beispiele für derartige Substituenten sind Methyl-, Ethyl-, i- und n-Propylgruppen, entsprechende Alkoxygruppen, Phenylgruppen und Trifluormethylgruppen.

Wie bereits erwähnt, werden jedoch Blockcopolykondensate mit unsubstituierten Einheiten I und ggf. II bevorzugt.

Innerhalb der Blöcke A) können die wiederkehrenden Einheiten der Formeln I und II statistisch oder ebenfalls in Blockform vorliegen, d.h. die Polyarylethersulfonblöcke A) können ihrerseits wiederum aus Blöcken mit wiederkehrenden Einheiten I und Blöcken mit wiederkehrenden Einheiten II aufgebaut sein. Der jeweilige Aufbau (statistisch oder blockweise) läßt sich durch entsprechende zeitliche Steuerung der Monomerzugabe erreichen.

Das Molekulargewicht (Zahlenmittelwert) der Polyarylethersulfonblöcke A) liegt im allgemeinen Bereich von 1500 bis 30.000, vorzugsweise 2000 bis 25000 und insbesondere im Bereich von 3000 bis 22.000.

Die als Komponente B) in den erfindungsgemäßen Blockcopolykondensaten enthaltenen Polyetherketonblöcke der allgemeinen Formel III machen 2 bis 25, vorzugsweise 4 bis 20 und insbesondere 5 bis 18 mol-%, bezogen auf die Summe der wiederkehrenden Einheiten der Komponenten A) und B), aus.

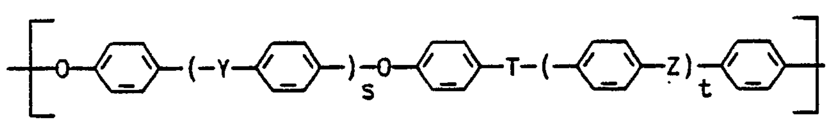

(III)

Wie bei der Komponente A können die Einheiten der Formel III auch mit $C_1$-$C_6$-Alkyl-, $C_1$-$C_6$-Alkoxy-, Phenyl-, Chlor- oder Fluor am aromatischen Kern substituiert sein. Bezüglich bevorzugter Substituenten sei auf die entsprechenden Ausführungen zur Komponente A) verwiesen.

Die Substituenten Y, T, und Z können jeweils -CO-, CRR$'$-, eine chem. Bindung oder -O-sein, mit der Maßgabe, daß mindestens einer der Substituenten Y, T und Z eine -CO-Gruppe ist.

R und R$'$ können jeweils Wasserstoffatome, $C_1$-$C_6$-Alkyl- oder Alkoxygruppen oder deren Chlor- oder Fluorderivate oder Arylgruppen darstellen. Vorzugsweise sind R und R$'$ Wasserstoffatome, Methyl-, Ethyl-, Trifluormethyl-oder Phenylgruppen.

s und t haben jeweils den Wert 0 oder 1.

Im folgenden seien einige bevorzugte Beispiele der allgemeinen Formel III aufgeführt:

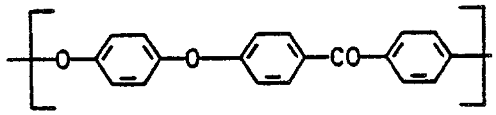

(III1)

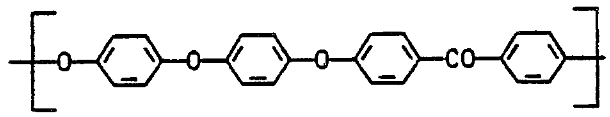

(III2)

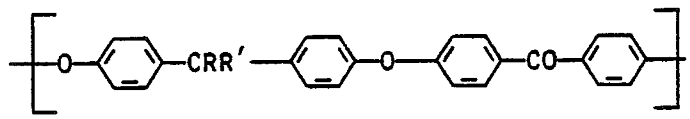

(III3)

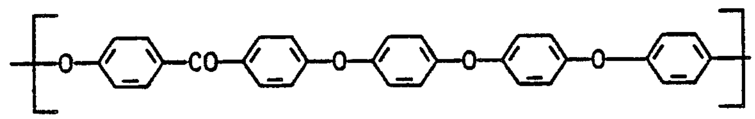

(III4)

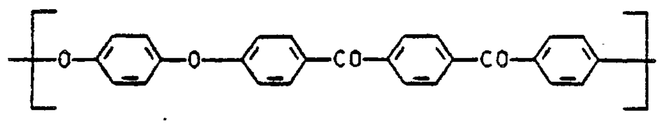

(III5)

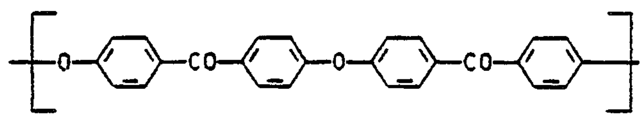

(III6)

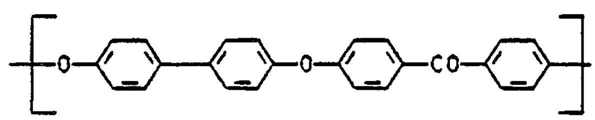

(III7)

Zur Herstellung der Einheiten der allgemeinen Formel I wird 4,4-Dichlordiphenylsulfon oder dessen $C_1$-$C_6$-Alkyl-, $C_1$-$C_6$-Alkoxy-, Aryl-, Chlor- oder Fluorderivate mit Hydrochinon oder dessen $C_1$-$C_6$-Alkyl-, $C_1$-$C_6$-Alkoxy-, Aryl-, Chlor- oder Fluorderivaten umgesetzt. Entsprechende Verfahren sind an sich bekannt und in der Literatur beschrieben.

Die Einheiten der Formel II erhält man durch Polykondensation von 4,4′-Dichlordiphenylsulfon oder dessen substituierten Derivaten mit Dihydroxyverbindungen der Formel

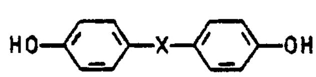

oder deren $C_1$-$C_6$-Alkyl-, $C_1$-$C_6$-Alkoxy-, Aryl-, Chlor- oder Fluorderivaten, wobei X die in Anspruch 1 angegebene Bedeutung hat, nach an sich bekannten Verfahren.

Die Polyaryletherketonblöcke der allgemeinen Formel III erhält man z.B. durch Polykondensation von Dihalogenverbindungen oder Dihydroxyverbindungen der Formel

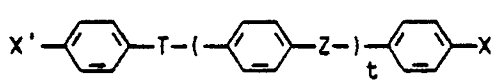

oder deren kernsubstituierten $C_1$-$C_6$-Alkyl-, $C_1$-$C_6$-Alkoxy-, Aryl-, Chlor-oder Fluorderivaten mit Dihydroxyverbindungen oder Dihalogenverbindungen der allgemeinen Formel

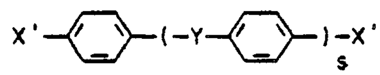

wobei T, Z, Y, s und t die in Anspruch 1 angegebene Bedeutung haben und X und X′ jeweils Chlor-, Fluor oder OH sind und das molare Verhältnis von Dihydroxyverbindungen zu Dihalogenverbindungen im Bereich von 0,8:1 bis 1,2:1 liegt.

Nachstehend seien einige Beispiele für Dihydroxy und Dihalogenverbindungen zur Herstellung der Polyetherketonblöcke B genannt:

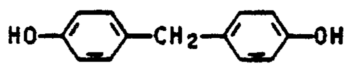
Di-(4-hydroxyphenyl)methan

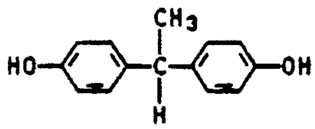
2,2-Di(4-hydroxyphenyl)ethan

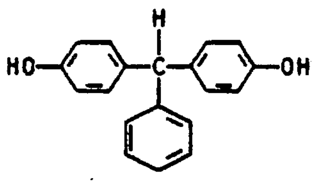
1-Phenyl-1,1-di-(4-hydroxyphenyl)-methan

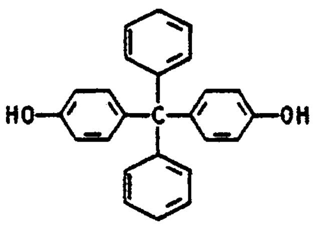
Diphenyl-di-(4-hydroxyphenyl)methan

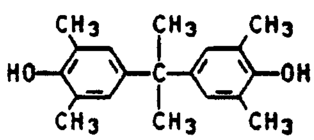
Tetramethylbisphenol A

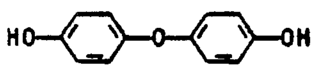
4,4'-Dihydroxydiphenylether

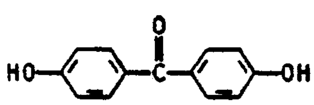
4,4'-Dihydroxybenzophenon

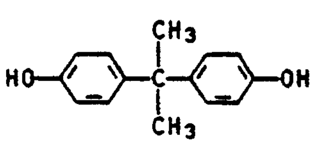
Bisphenol A

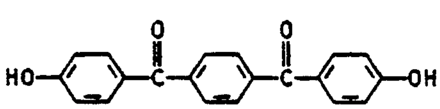
1,4-Di(4-hydroxybenzoyl)benzol

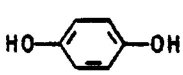
Hydrochinon

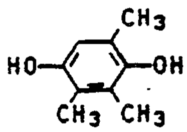

2,3,6-Trimethylhydrochinon

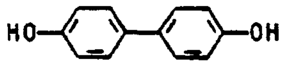

Dihydroxydiphenyl

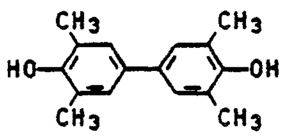

3,3',5,5'-Tetramethyldihydroxydiphenyl

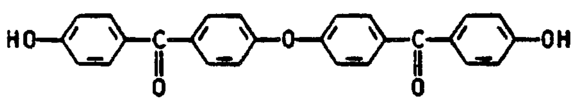

Dihydroxybenzophenonether

Von den vorstehend aufgeführten Dihydroxyverbindungen werden 4,4'-Dihydroxydiphenyl, 3,3',5,5'-Tetramethyl-4,4'-dihydroxydiphenyl, Bisphenol A, Tetramethyl-Bisphenol A und 2,3,6-Trimethylhydrochinon besonders bevorzugt.

Dihalogenverbindungen

Bezeichnung der Chlorverbindung

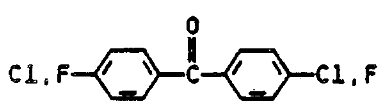

4,4'-Dichlorbenzophenon

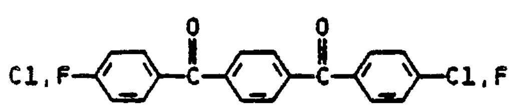

1,4-Di(4-chlorbenzoyl)benzol

Die vorstehend genannten Verbindungen können, solange die Voraussetzungen des Anspruchs 1 erfüllt sind, prinzipiell in beliebiger Kombination miteinander umgesetzt werden.

Das Molekulargewicht $\overline{M}_n$ (Zahlenmittelwert) der Blöcke A liegt - wie bereits erwähnt - im allgemeinen im Bereich von 1500 bis 30.000, insbesondere von 2000 bis 20.000, besonders bevorzugt im Bereich von 2000 bis 15.000, das der Blöcke B im allgemeinen im Bereich von 500 bis 15.000, vorzugsweise von 1500 bis 10.000.

Das Gesamtmolekulargewicht der Blockcopolykondensate liegt im Bereich von 15 000 - 200 000, vorzugsweise von 15 000 - 100 000 und insbesondere im Bereich von 20 000 - 50 000.

Alle vorstehend genannten Molekulargewichtswerte sind Zahlenmittelwerte, wie sie z.B. in E. Vollmert, Grundriß der Makromolekularen Chemie, Bd. 3, S. 122 ff (1979) definiert sind.

Die Copolykondensate können mit anderen Thermoplasten, beispielsweise Polyestern, Polyamiden, Polyurethanen, Polyolefinen, Polyvinylchlorid und Polyoxymethylenen in Mengen von 5 bis 60 Gew.-%, vorzugsweise von 20 bis 50 Gew.-%, bezogen auf die Formmassen, gemischt werden.

Sie können außerdem mit verstärkend wirkenden Füllstoffen, gegebenenfalls transparenten Pigmenten und anderen Hilfs- und Zusatzstoffen modifiziert werden.

Als verstärkend wirkende Füllstoffe seien beispielsweise Asbest, Kohle und vorzugsweise Glasfasern genannt, wobei die Glasfasern z.B. in Form von Glasgeweben, -matten, -vliesen und/oder vorzugsweise Glasseidenrovings oder geschnittener Glasseide aus alkaliarmen E-Glasen mit einem Durchmesser von 5 bis 20 µm, vorzugsweise 8 bis 15 µm, zur Anwendung gelangen, die nach ihrer Einarbeitung eine mittlere Länge von 0,05 bis 1 mm, vorzugsweise 0,1 bis 0,5 mm, aufweisen. Die mit Glasseidenrovings oder geschnittener Glasseide verstärkten Formmassen enthalten zwischen 10 und 60 Gew.-%, vorzugsweise 20 bis 50 Gew.-%, des Verstärkungsmittels, bezogen auf das Gesamtgewicht, während die imprägnierten Glasgewebe, -matten und/oder -vliese zwischen 10 und 80 Gew.-%, vorzugsweise zwischen 30 und 60 Gew.-%, Copolykondensate, bezogen auf das Gesamtgewicht, enthalten. Als Pigmente eignen sich beispielsweise Titandioxid, Cadmiumoxid, Zinksulfid, Bariumsulfat und Ruß. Als andere Zusatz- und Hilfsstoffe

kommen beispielsweise in Betracht Farbstoffe, Schmiermittel, wie z.B. Graphit, Polytetrafluorethylen oder Molybdändisulfid, Schleifmittel, wie z.B. Carborund, Lichtstabilisatoren und Hydrolyseschutzmittel. Auch Wollastonit, Calciumcarbonat, Glaskugeln, Quarzmehl und Bornitrid oder Mischungen dieser Füllstoffe sind verwendbar. Die Pigmente, Zusatz- und Hilfsstoffe werden üblicherweise in Mengen von 0,01 bis 3 Gew.-%, bezogen auf das Gewicht an Copolykondensat, eingesetzt.

Die erfindungsgemäßen Blockcopolykondensate können nach an sich bekannten Verfahren zur Herstellung von Blockcopolymeren hergestellt werden, wie sie in der Literatur beschrieben sind. Grundsätzlich können die Blöcke A und B getrennt hergestellt und anschließend miteinander verknüpft werden oder aber die Blockcopolykondensate werden durch entsprechende aufeinanderfolgende getrennte Zugabe der Dihydroxyverbindungen oder Dihalogenverbindungen in einem Zuge synthetisiert.

Die Verfahrensbedingungen wie Temperatur, Druck, geeignete Lösungsmittel und evtl. Zusätze (Katalysatoren) sind die gleichen, wie sie für statistische Copolykondensate in der EP-A 113 112 und der EP-A 135 130 beschrieben sind, so daß sich hier nähere Angaben erübrigen.

Besonders geeignet ist die Umsetzung in aprotischen polaren Lösungsmitteln in Gegenwart von wasserfreien Alkalicarbonaten als Katalysatoren. Eine besonders bevorzugte Kombination ist N-Methylpyrrolidon als Lösungsmittel und $K_2CO_3$ als Katalysator.

Die Menge an N-Methylpyrrolidon beträgt im allgemeinen 5 bis 100 Mol, vorzugsweise 5 bis 20 Mol, bezogen auf ein Mol Monomere. Dies ergibt einen bevorzugten Feststoffgehalt der Reaktionslösung im Bereich von 5 bis 50 Gew.%, besonders bevorzugt 10 bis 40 Gew.%.

Das bei der Polykondensation entstehende Wasser kann mit Hilfe eines Azeotropbildners, Anlegen eines Unterdrucks oder vorzugsweise durch Einleiten eines Stickstoffstroms und Abdestillation entfernt werden.

Als Azeotropbildner eignen sich alle Verbindungen, die bei Normaldruck im Bereich der Reaktionstemperatur sieden und die sich mit dem Reaktionsgemisch homogen mischen lassen, ohne chemische Reaktionen einzugehen.

Die Reaktionstemperatur liegt im allgemeinen im Bereich von 130 bis 220 °C, vorzugsweise 150 bis 210 °C; die Gesamt-Reaktionsdauer richtet sich nach dem gewünschten Kondensationsgrad, liegt aber im allgemeinen im Bereich von 0,1 bis 15 Stunden in den einzelnen Stufen.

Im Anschluß an die Polykondensation können zur Stabilisierung freie Phenolat-Endgruppen mit einem Aryl- oder Alkylierungsmittel, wie z.B. Methylchlorid, umgesetzt werden. Dies erfolgt vorzugsweise bei Temperaturen von 50-200 °C, insbesondere 50-150 °C.

Das bei der Polykondensation mit $K_2CO_3$ anfallende suspendierte Alkalihalogenid kann mit einer geeigneten Trenneinrichtung, beispielsweise einem Klärfilter oder einer Zentrifuge abgetrennt werden.

Die Isolierung der Copolykondensate aus der Lösung kann durch Verdampfen des Lösungsmittels oder Ausfällung in einem geeigneten Nichtlösungsmittel erfolgen.

Die erfindungsgemäßen Blockcopolykondensate zeichnen sich durch ihre ausgewogenen Eigenschaften aus. Bei einer hohen Wärmeformbeständigkeit und einer guten Spannungsrißbeständigkeit zeichnen sie sich auch durch ihre Transparenz und ihre gute Lösungsmittelbeständigkeit aus.

Die erfindungsgemäßen Blockcopolykondensate können zur Herstellung von Formkörpern, Folien und Fasern verwendet werden. Insbesondere eignen sie sich wegen ihrer guten Eigenschaften zur Herstellung von Leiterplatten und elektrischen Steckverbindungen.

Die in den nachfolgenden Beispielen angegebene reduzierte Viskosität $\eta_{spec/c}$ wurde bei 25 °C in 4-Chlorphenol/1,2-Dichlorbenzol (Gewichtsverhältnis 3:2) (1 g/100 ml) bestimmt.

Beispiel 1

229,73 g (0,8 mol) 4,4′-Dichlordiphenylsulfon, 90,73 g (0,824 mol) Hydrochinon und 125,3 g (0,91 mol) Kaliumkarbonat wurden mit 500 ml N-Methylpyrrolidon versetzt. Das Reaktionsgemisch wurde unter ständigem Rühren auf 175 °C erhitzt und das entstehende Reaktionswasser 4 Stunden bei dieser Temperatur durch einen starken Stickstoffstrom in einen Wasserabscheider übergetrieben. Anschließend wurde die Temperatur auf 180 °C erhöht und 4 Stunden bei dieser Temperatur gerührt.

Nach dem Abkühlen des Reaktionsgemisches wurden 42,30 g (0,19 mol) 4,4′-Difluorbenzophenon, 17,62 g (0,16 mol) Hydrochinon, 24,32 g (0,18 mol) Kaliumkarbonat und 750 ml N-Methylpyrrolidon hinzugegeben. Unter ständigem Durchleiten von Stickstoff wurde auf 150 °C erhitzt und nach einer Stunde die Temperatur auf 185 °C gesteigert. Das Reaktionsgemisch wurde 7 Stunden bei dieser Temperatur gehalten. Durch 30 minütiges Einleiten eines Methylchloridstromes wurde die Polykondensation abgebrochen. Das Polymere wurde in Wasser/Methanol (Gewichtsverhältnis 1:1) ausgefällt und zur Entfernung der

anorganischen Bestandteile mehrmals mit Wasser gewaschen und dann 12 Stunden bei 100 °C im Vakuum getrocknet.

Das Produkt besaß eine reduzierte Viskosität von 0,53 und eine durch DSC-Messung bestimmte Glastemperatur von 176 °C. Eine Preßplatte aus diesem Material war transparent, wenngleich leicht gelblich verfärbt.

Beispiel 2

Im ersten Reaktionsschritt wurden analog Beispiel 1 143,58 g (0,5 mol) 4,4′-Dichlordiphenylsulfon, 13,14 g (0,053 mol) 4,4′-Dihydroxydiphenylsulfon und 52,03 g (0,473 mol) Hydrochinon mit 79,82 g (0,578 mol) Kaliumkarbonat in 450 ml N-Methylpyrrolidon umgesetzt.

Im zweiten Reaktionsschritt wurden analog Beispiel 1 30,11 g (0,138 mol) 4,4′-Difluorbenzophenon, 13,76 g (0,13 mol) Hydrochinon, 19,0 g (0,138 mol) Kaliumkarbonat und 380 ml N-Methylpyrrolidon zugegeben.

Nach der analog Beispiel 1 erfolgten Aufarbeitung besaß das getrocknete Produkt eine reduzierte Viskosität von 0,80 und eine durch DSC-Messung bestimmte Glasübergangstemperatur von 191 °C. Eine Preßplatte aus diesem Material war transparent und von hellerer Farbe als die in Beispiel 1 beschriebene Platte.

Beispiel 3

Im ersten Reaktionsschritt wurden analog Beispiel 1 230,0 g (0,8 mol) 4,4′-Dichlordiphenylsulfon, 4,12 g (0,016 mol) 4,4′-Dihydroxydiphenylsulfon, 88,92 g (0,808 mol) Hydrochinon mit 125,3 g (0,906 mol) Kaliumkarbonat in 610 ml N-Methylpyrrolidon umgesetzt.

Im zweiten Reaktionsschritt wurden analog Beispiel 1 17,61 g (0,080 mol) 4,4′-Difluorbenzophenon, 5,29 g (0,048 mol) Hydrochinon, 5,29 g (0,053 mol) Kaliumkarbonat und 530 ml N-Methylpyrrolidon zugegeben.

Nach der analog Beispiel 1 erfolgten Aufarbeitung besaß das getrocknete Produkt eine reduzierte Viskosität von 0,56 und eine durch DSC-Messung bestimmte Glasübergangstemperatur von 192 °C. Eine Preßplatte aus diesem Material war transparent und von hellerer Farbe als die in Beispiel 1 beschriebene Platte.

Beispiel 4

Im ersten Reaktionsschritt wurden analog Beispiel 1 230,0 g (0,8 mol) 4,4′-Dichlordiphenylsulfon, 4,12 g (0,016 mol) 4,4′-Dihydroxydiphenylsulfon, 88,92 g (0,808 mol) Hydrochinon mit 124,7 g (0,902 mol) Kaliumkarbonat in 610 ml N-Methylpyrrolidon umgesetzt.

Im zweiten Reaktionsschritt wurden analog Beispiel 1 10,47 g (0,048 mol) 4,4′-Difluorbenzophenon, 2,64 g (0,024 mol) Hydrochinon, 3,65 g (0,026 mol) Kaliumkarbonat und 490 ml N-Methylpyrrolidon zugegeben.

Nach der analog Beispiel 1 erfolgten Aufarbeitung besaß das getrocknete Produkt eine reduzierte Viskosität von 2,74 und eine durch DSC-Messung bestimmte Glasübergangstemperatur von 197 °C. Eine Preßplatte aus diesem Material war transparent und von hellerer Farbe als die in Beispiel 1 beschriebene Platte.

Beispiel 5

Im ersten Reaktionsschritt wurden analog Beispiel 1 143,58 g (0,5 mol) 4,4′-Dichlordiphenylsulfon, 11,76 g (0,052 mol) 2,2-Di-(4-hydroxydiphenyl)propan, 51,04 g (0,464 mol) Hydrochinon mit 78,3 g (0,567 mol) Kaliumkarbonat in 450 ml N-Methylpyrrolidon umgesetzt.

Im zweiten Reaktionsschritt wurden analog Beispiel 1 11,01 g (0,050 mol) 4,4′-Difluorbenzophenon, 3,30 g (0,03 mol) Hydrochinon, 4,56 g (0,033 mol) Kaliumkarbonat und 280 ml N-Methylpyrrolidon zugegeben.

Nach der analog Beispiel 1 erfolgten Aufarbeitung besaß das getrocknete Produkt eine reduzierte Viskosität von 0,73 und eine durch DSC-Messung bestimmte Glasübergangstemperatur von 190 °C. Eine Preßplatte aus diesem Material war transparent und von hellerer Farbe als die in Beispiel 1 beschriebene Platte.

Beispiel 6

Im ersten Reaktionsschritt wurden analog Beispiel 1 143,58 g (0,5 mol) 4,4′-Dichlordiphenylsulfon, 1,96 g (0,011 mol) 4,4′-Dihydroxydiphenylsulfon, 56,65 g (0,515 mol) Hydrochinon mit 79,82 g (0,578 mol) Kaliumkarbonat in 450 ml N-Methylpyrrolidon umgesetzt.

Im zweiten Reaktionsschritt wurden analog Beispiel 1 24,97 g (0,114 mol) 4,4′-Difluorbenzophenon, 9,18 g (0,083 mol) Hydrochinon, 12,67 g (0,092 mol) Kaliumkarbonat und 380 ml N-Methylpyrrolidon zugegeben.

Nach der analog Beispiel 1 erfolgten Aufarbeitung besaß das getrocknete Produkt eine reduzierte Viskosität von 0,65 und eine durch DSC-Messung bestimmte Glasübergangstemperatur von 191 °C. Eine Preßplatte aus diesem Material war transparent und von hellerer Farbe als die in Beispiel 1 beschriebene Platte.

Vergleichsbeispiel

34,46 g (0,12 mol) 4,4′-Dihydroxydiphenylsulfon, 14,09 g (0,127 mol) Hydrochinon und 21,23 g Kaliumcarbonat wurden in 200 ml Sulfolan und 160 ml Toluol 1 Stunde bei Raumtemperatur unter Durchleiten eines Stickstoffstromes gerührt. Unter Abdestillieren des Toluols wurde die Temperatur der Reaktionsmischung danach während 2 Stunden auf 180 °C erhöht.

Nach Abkühlen auf Raumtemperatur wurden 104,74 g (0,48 mol) 4,4′-Difluorbenzophenon, 51,97 g (10,47 mol) Hydrochinon, 78,28 g Kaliumcarbonat, 200 ml Toluol und 360 ml Sulfolan zugegeben und 30 Minuten unter Durchleiten eines Stickstoffstromes bei Raumtemperatur gerührt. Danach wurde eine Stunde unter Rückfluß bei 140 bis 150 °C erhitzt und dann die Temperatur der Reaktionsmischung durch Abdestillieren des Toluols auf 225 °C gesteigert. Frisches Toluol wurde dabei tropfenweise zugegeben. Nach ca. 40 Minuten Reaktionszeit bei 225 °C wurde Methylchlorid in die Reaktionsmischung eingeleitet, die nach 15 Minuten schlagartig so hochviskos wurde, daß sie nicht mehr gerührt werden konnte.

Nach dem Erkalten wurde der feste Kolbeninhalt fein zerkleinert und mit warmem Wasser 4 mal gewaschen. Beim letzten mal wurde das Waschwasser mit Oxalsäure auf einen pH-Wert von 2 eingestellt. Das erhaltene Polymere wurde 24 Stunden bei 200 °C im Vakuum getrocknet. Es wies eine reduzierte Viskosität von $\eta$red = 1,05 dl/g und eine Glasübergangstemperatur von 163 °C auf.

Eine Preßplatte aus diesem Material war dunkelgrau opak und wies keine transparenten Stellen auf.

Polymer-Pulver, die entsprechend den Beispielen 1 bis 6 und dem Vergleichsbeispiel hergestellt worden waren, wurden in einem Soxhlet-Extraktor mit Dichlormethan als Lösungsmittel bis zur erschöpfenden Extraktion behandelt und der Extraktionsrückstand (= in Extraktor verbleibende unlösliche Bestandteile) bestimmt.

Die aus den Beispielen 1 bis 6 ermittelten Daten sind zusammen mit der Angabe des Gehalts der Blockcopolykondensate an CO-Gruppen, bezogen auf die Summe von -CO- und $SO_2$-Gruppen in der nachstehenden Tabelle wiedergegeben.

Tabelle 1

| Beispiel Nr. | Gehalt an C=O-Gruppen [Mol%] | Tg [°C] | Red.Visk. | Extraktionsrückstand [Gew.%] | Transparenz |
|---|---|---|---|---|---|
| 1 | 19,19 | 176 | 0,53 | 84,5 | ja |
| 2 | 19,97 | 191 | 0,80 | 70,9 | ja |
| 3 | 9,63 | 192 | 0,56 | 98,4 | ja |
| 4 | 5,56 | 197 | 2,74 | 92,0 | ja |
| 5 | 9,09 | 190 | 0,73 | 85,7 | ja |
| 6 | 18,57 | 161 | 0,65 | 94,6 | ja |
| Vergleichsbeispiel | 80,00 | 163 | 1,05 | 85,5 | nein |

## Ansprüche

1. Hochtemperaturbeständige Blockcopolykondensate, aufgebaut aus
A) 75 bis 98 mol% Polyarylethersulfonblöcken aus

$A_1$) 80 bis 100 mol% wiederkehrenden Einheiten der Formel I

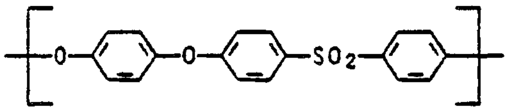

(I)

oder deren kernsubstituierten $C_1$-$C_6$-Alkyl- oder $C_1$-$C_6$-Alkoxy-, Aryl-, Chlor- oder Fluorderivaten und
$A_2$) 0 bis 20 mol% wiederkehrenden Einheiten der allgemeinen Formel II

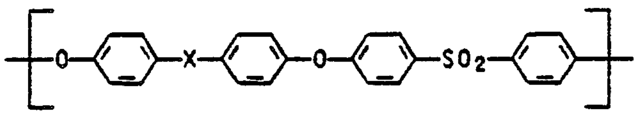

(II)

oder deren kernsubstituierten $C_1$-$C_6$-Alkyl-, $C_1$-$C_6$-Alkoxy-, Aryl-, Chlor- oder Fluorderivaten wobei X $-SO_2-$, $-C(CH_3)_2-$, -S-, -O- oder eine chemische Bindung darstellt,

und

B) 2 bis 25 mol% Polyaryletherketonblöcken aus wiederkehrenden Einheiten der allgemeinen Formel III

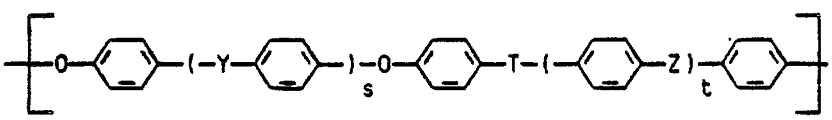

(III)

oder deren kernsubstituierten $C_1$-$C_6$-Alkyl-, $C_1$-$C_6$-Alkoxy-, Aryl-, Chlor- oder Fluorderivaten, wobei
Y, T und Z jeweils -CO-, $CRR'$, eine chem. Bindung oder -O-sein können und mindestens einer der Substituenten Y, T und Z -CO-ist, R und R′ Wasserstoffatome, $C_1$-$C_6$-Alkylgruppen, $C_1$-$C_6$-Alkoxygruppen oder deren Chlor- oder Fluorderivate darstellen,
und s und t jeweils den Wert 0 oder 1 haben.

2. Verwendung der hochtemperaturbeständigen Blockcopolykondensate gemäß Anspruch 1 zur Herstellung von Formkörpern.

3. Formkörper, enthaltend als wesentliche Komponente hochtemperaturbeständige Blockcopolykondensate gemäß Anspruch 1.